(19) Europäisches Patentamt
European Patent Office
Office européen des brevets

(11) EP 2 848 590 A1

(12) EUROPEAN PATENT APPLICATION
published in accordance with Art. 153(4) EPC

(43) Date of publication:
**18.03.2015 Bulletin 2015/12**

(21) Application number: **13772572.7**

(22) Date of filing: **18.03.2013**

(51) Int Cl.:
***C01G 45/00*** (2006.01) ***C09D 181/04*** (2006.01)
***C09J 181/04*** (2006.01) ***C09K 3/10*** (2006.01)

(86) International application number:
**PCT/JP2013/057678**

(87) International publication number:
**WO 2013/150888 (10.10.2013 Gazette 2013/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.04.2012 JP 2012084145**
**20.12.2012 JP 2012278402**

(71) Applicant: **Tokan Material Technology Co., Ltd.**
**Kita-ku**
**Osaka-shi**
**Osaka 531-8526 (JP)**

(72) Inventors:
- **HAMADA, Yukiko**
  **Ichihara-shi**
  **Chiba 299-0196 (JP)**
- **MATSUMOTO, Kazunori**
  **Ichihara-shi**
  **Chiba 299-0196 (JP)**
- **ECHIGOYA, Kouki**
  **Moriyama-shi**
  **Shiga 524-0041 (JP)**
- **MATODA, Tatsuo**
  **Osaka-shi**
  **Osaka 531-8526 (JP)**
- **SHIMOMURA, Hiroshi**
  **Osaka-shi**
  **Osaka 531-8526 (JP)**
- **SHIBATA, Hirotake**
  **Osaka-shi**
  **Osaka 531-8526 (JP)**

(74) Representative: **Johansson, Lars E.**
**Hynell Patenttjänst AB**
**P.O. Box 138**
**683 23 Hagfors (SE)**

# (54) MANGANESE DIOXIDE AND CURABLE COMPOSITION CONTAINING SAME

(57) Provided are: manganese dioxide and its hardenable composition which can harden liquid polysulfide polymer and be used to obtain a hardened product that suppresses its swelling and decrease in its strength even after a long period of hot water immersion. This manganese dioxide is manganese dioxide used for a hardener for liquid polysulfide polymer and is characterized by comprising a monoclinic cation-substituted birnessite manganese dioxide obtained by substituting with a monovalent to trivalent cation a sodium ion which is present between the layers of a monoclinic sodium birnessite, as shown in the following formula, $Na_{0.55}Mn_2O_4 \cdot 1.5H_2O$.

[Figure 2]

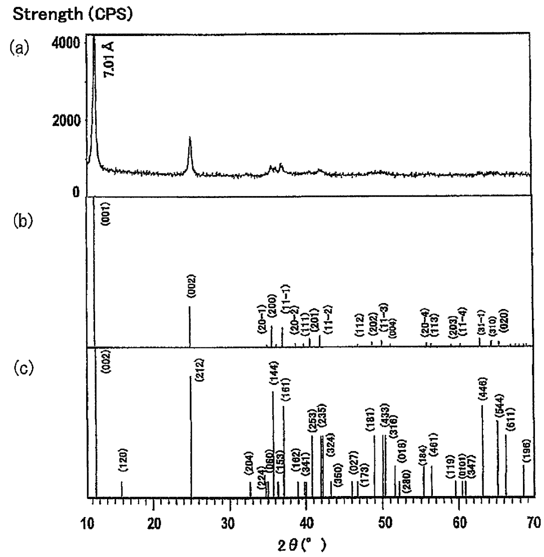


EP 2 848 590 A1

Printed by Jouve, 75001 PARIS (FR)

## Description

[Technical field]

The present invention relates to manganese dioxide and its hardenable composition preferably used as a hardener for liquid polysulfide polymer.

[Background of the Invention]

Manganese dioxide activated by alkali treatment is used as an oxidizing agent for liquid polysulfide polymer. For example, natural manganese dioxide ore treated by alkali and manganese dioxide having a sodium birnessite structure as described in Patent Document 1 etc. are used for manganese dioxide, and they are generally processed into a paste-like hardener dispersed in a plasticizer.

A rubber-like hardened product obtained by hardening liquid polysulfide polymer with a hardener comprising manganese dioxide contains sulfur in a main chain of a molecule. The product does not contain any double bond and thus has excellent oil resistance, weather resistance, water tightness, and airtightness, as well as good adhesiveness. For that reason, the hardened product obtained from the liquid polysulfide polymer is widely used as a sealing material, an adhesive, and a coating material. Particularly, for multiple glass applications, the product has been used for a long time, since it has better hardenability, water tightness, and airtightness than the other base materials such as a silicone-based sealing material or the like. However, the hardened product obtained by hardening polysulfide polymer with a hardener comprising manganese dioxide sometimes significantly swelled and decreased its strength during hot water immersion in acceleration durability test, compared with the other base materials.

For this reason, Patent Document 2 proposes that manganese dioxide is treated by acid and the hardened product obtained by using the acid-treated manganese dioxide can be prevented from swelling and decreasing its strength during the hot water immersion. It is possible to eliminate alkali from the surface of the acid-treated manganese dioxide described in the Patent Document 2. However, alkali inside the manganese dioxide sometimes eluted when the manganese dioxide is dispersed in a plasticizer with a triple roll mill etc. in the preparation of a paste-like hardener. Therefore, when the hardened product obtained from the polysulfide by the use of the acid-treated manganese dioxide is exposed to a long period of hot water immersion test, it sometimes swelled and decreased its strength.

Furthermore, Patent Document 3 proposes that the use of an organic compound other than manganese dioxide as a hardener can prevent the hardened product from swelling and decreasing its strength during hot water immersion. When the organic compound described in the Patent Document 3 is used, however, it is important to appropriately select a catalyst and an additive in order to maintain balance among acquisition of appropriate working hours, early hardening, and physical properties of a sealing material after hardening. When the appropriate compounding ratio was not kept, the hardened product significantly degraded its performance. Therefore, there has been a need for improvement of preventing the hardened product obtained by the use of polysulfide polymer from swelling and decreasing its strength during hot water immersion when the manganese dioxide with a high workability and practicality is used for a hardener.

[Prior-Art Documents]

[Patent Documents]

Patent Document 1: Japanese Publication Application No. 63-22857 Gazette
Patent Document 2: Japanese Publication Application No. 2007-161506 Gazette
Patent Document 3: International Publication Application No. 2007/000904 Gazette

[Summary of the Invention]

[Problems to be solved by the Invention]

The present invention aims to provide manganese dioxide and its hardenable composition, which allow liquid polysulfide polymer to be hardened and produce a hardened product with less swelling and less decrease in strength even after a long period of hot water immersion.

[Means for solving the problems]

Manganese dioxide of the present invention is manganese dioxide used for a hardener for liquid polysulfide polymer and consists of monoclinic cation-substituted birnessite manganese dioxide obtained by substituting with a monovalent to trivalent cation a sodium ion which is present between the layers of monoclinic sodium birnessite, as shown in the following formula (1),

$$Na_{0.55}Mn_2O_4 \cdot 1.5H_2O \qquad (1)$$

Furthermore, the hardenable composition of the present invention is characterized by containing the above-described manganese dioxide and liquid polysulfide polymer of the present invention.

[Effects of the Invention]

The manganese dioxide of the present invention is an activated manganese dioxide having a monoclinic birnessite structure and can harden the liquid polysulfide polymer. In addition, the sodium ion contained between the layers of the monoclinic birnessite is substituted by the cation with lower absorptivity, and thus it is possible to lessen swelling and decrease in strength of the hardened product obtained by the use of polysulfide polymer even after a long period of hot water immersion.

Said cation is preferably selected from at least one of a calcium ion, a proton, an ammonium ion, a magnesium ion, a strontium ion, a nickel ion, an iron (III) ion, a lanthanum ion, a zinc ion, and a barium ion.

Manganese dioxide of the present invention preferably has a sodium content of 0.15 % by weight or less. Furthermore, interlayer distance of the monoclinic cation-substituted birnessite is preferably 6.90-7.25 Å. This manganese dioxide is obtained by treating the monoclinic sodium birnessite shown in the above-mentioned formula (1) with an aqueous solution including a monovalent to trivalent cation, thereby substituting the sodium ion with the cation and drying the birnessite.

In addition, manganese dioxide may be preferably coated on its surface with an organic compound which is liquid at room temperature, and the organic compound may preferably have at least two hydroxyl groups in its molecule and the boiling point of more than 190 °C. This organic compound may be preferably selected from at least one of diethylene glycol, ethylene glycol, 1,5-pentanediol, polyethylene glycol, triethanolamine, and diethanolamine. More preferably, the organic compound is diethylene glycol and/or triethanolamine. Manganese dioxide coated with this organic compound was cured at 70 °C in the state of a paste hardener dispersed in a plasticizer for three days. Then, the paste hardener was mixed with a main agent including liquid polysulfide polymer to produce a mixed hardenable composition. A hardness of the hardenable composition can be set to more than 9 at 6 hours after the mixture of the main agent and the hardener.

The hardenable composition of the present invention is characterized that the manganese dioxide as mentioned above can harden the liquid polysulfide polymer and a hardened product can be obtained which enables less swelling and less decrease in strength even after a long period of hot water immersion.

The hardenable composition as mentioned above can comprise at least one selected from a filler, a plasticizer, and a vulcanization accelerator. The filler can be selected from at least one of carbon black, calcium carbonate, silica, and a micro balloon. The plasticizer can be selected from at least one of phthalic ester, chlorinated paraffin, dipropylene glycol dibenzoate, and a halogen-terminal sulfur-containing polymer. The vulcanization accelerator can be selected from at least one of a thiuram vulcanization accelerator and a guanidine vulcanization accelerator.

The hardened product of the hardenable composition of the present invention can reduce a volume swelling ratio to less than 20% after immersed in 80 °C hot water immersion for ten days.

[Brief Description of the Drawings]

[Figure 1] Figures 1(a)-(c) are X-ray diffraction charts. Figure 1(a) is a X-ray diffraction chart of the manganese dioxide obtained in the Synthesis Example 1, figure 1(b) is a standard X-ray diffraction chart of the monoclinic birnessite, and figure 1(c) is a standard X-ray diffraction chart of the orthorhombic birnessite.

[Figure 2] Figures 2(a)-(c) are X-ray diffraction charts. Figure 2 (a) is a X-ray diffraction chart of the manganese dioxide obtained in the Synthesis Example 2, figure 2(b) is a standard X-ray diffraction chart of the monoclinic birnessite, and figure 2(c) is a standard X-ray diffraction chart of the orthorhombic birnessite.

[Detailed Description of the Invention]

Hereinafter, the present invention will be described in detail below.

The Patent Document 1 described above shows that the manganese dioxide used as a hardener for polysulfide polymer has an orthorhombic sodiumbirnessite structure ($Na_4Mn_{14}O_{27}{\cdot}9H_2O$). However, the commercially available manganese dioxide for hardening polysulfide polymer is known to have a monoclinic sodium birnessite structure ($Na_{0.55}Mn_2O_4{\cdot}1.5H_2O$). The manganese dioxide having this monoclinic sodium birnessite structure has excellent ability to oxidize and harden the liquid polysulfide polymer.

The manganese dioxide of the present invention comprises monoclinic cation-substituted birnessite manganese dioxide obtained by substituting with a monovalent to trivalent cation a sodium ion which is present between the layers of monoclinic sodium birnessite, as shown in the following formula (1),

$$Na_{0.55}Mn_2O_4{\cdot}1.5H_2O \qquad (1)$$

This manganese dioxide has the monoclinic birnessite structure and thus has excellent ability to oxidize the liquid polysulfide polymer. The interlayer distance of this monoclinic birnessite structure is preferably 6.70-7.50 Å, more preferably 6.90-7.25 A. Such a range of the interlayer distance allows the monoclinic birnessite structure to be formed.

The monoclinic sodium birnessite shown in said formula (1) contains sodium ion between the layers and this sodium ion has high water absorbability. Therefore, the polysulfide polymer hardened with the monoclinic sodium birnessite manganese dioxide initially has good water tightness and airtightness, but shows high degree of swelling and significant decrease in strength of the hardened product after the hot water immersion.

The manganese dioxide of the present invention can reduce the water absorbability since a sodium ion with high water absorbability which is present between the layers of monoclinic sodium birnessite structure is substituted with a monovalent to trivalent cation with low water absorbability. Furthermore, it is possible to significantly reduce water absorbability of a hardened product for the polysulfide polymer by using this manganese dioxide as a hardener, thereby allowing for less swelling and less decrease in strength of the hardened product even after a long period of hot water immersion. That is, it is possible to improve long-term durability of the hardened product for the polysulfide polymer.

The monovalent to trivalent cation for substituting the sodium ion is not specifically limited as long as it has a radius of an ion which is introduced between the layers of the monoclinic birnessite structure and has low water absorbability. These preferably include, for example, Metal ion, such as a calcium ion, a magnesium ion, a strontium ion, a nickel ion, an iron (III) ion, a lanthanum ion, a zinc ion, and a barium ion, a proton, an ammonium ion and the like.

In the present invention, substitution of the sodium ion with the monovalent to trivalent cation refers to preparation of the content of the monovalent to trivalent cation at least more than that of the sodium ion.

In order to reduce a volume swelling ratio of the hardened product for the polysulfide polymer during a long period of hot water immersion, the substitution rate of low water-absorptive cation is high, namely, content of the remaining sodium ion may be preferably small. Content of the sodium ion in the manganese dioxide substituted with cation may be preferably 0.40 % by weight or less, more preferably 0.15 % by weight or less.

The monoclinic sodium birnessite shown by the said formula (1) is treaded with an aqueous solution containing the monovalent to trivalent cation, and the sodium ion is substituted with the cation to introduce the monovalent to trivalent cation between the layers of the monoclinic birnessite. Then, the resultant product is washed with water and dried to achieve the manganese dioxide of the present invention. General ion substitution method other than the method as shown above can be used for a method of substituting the sodium ion with the monovalent to trivalent cation.

As a birnessite, monoclinic sodium birnessite can be used, which is activated by treating by alkali natural birnessite mineral and birnessite obtained by chemical synthesis. The birnessite obtained by chemical synthesis includes those obtained by a precipitation method, that is, those obtained by dropping an alkaline aqueous solution, such as caustic soda, into an aqueous solution, such as manganese chloride, manganese sulfate, and manganese nitrate in the presence of oxygen.

The aqueous solution containing the monovalent to trivalent cation will not be specifically limited, as long as it includes a water-soluble metal salt. The metal salt may be preferably chloride, sulfate, nitrate, carbonate, and organic acid salt. Concentration of the metal salt in the aqueous solution may be preferably 0.5 to 50 % by weight, more preferably 2 to 30 % by weight.

A treatment method with the aqueous solutions containing the monovalent to trivalent cation is not specifically limited. For example, manganese dioxide may be added to these aqueous solutions and then stirred. The amount of the manganese dioxide added to the aqueous solutions may be preferably 0.1-200 g, more preferably 0.5-150g with respect to 1 liter of aqueous solution containing cation.

Treatment condition includes temperature of an aqueous solution preferably 10-80 °C, more preferably 20-50 °C and treatment time of preferably 1-72 hours, more preferably 5-24 hours stirring.

Condition for drying the manganese dioxide substituted with cation is preferably 20-180 °C, more preferably

20-150 °C, further more preferably 60-150 °C, and most preferably 60-100 °C and 1 to 150 hours.

The manganese dioxide of the present invention is coated on its surface with an organic compound which contains at least two hydroxyl groups in its molecule, has the boiling point more than 190 °C, and is liquid at room temperature, to improve its heat resistance. This prevents decrease in hardenability after the manganese dioxide processed into a paste-like hardener dispersed in a plasticizer is exposed to heat accelerated curing. This leads to less active change in the hardener after storage/distribution, improves storage stability of the hardener, and allows for more stable handleability and workability.

Conventionally, the paste hardener obtained by dispersing the manganese dioxide in the plasticizer has less active change after storage/distribution compared with the hardener consisting of other base materials such as a silicone-based sealing material or the like. For more stable handleability and workability, however, there has been a needs for further improving the storage stability of the hardener. As an index of storage stability of the hardener, change in the hardenability after heat accelerated curing test is often evaluated.

An organic compound which is liquid at room temperature is an organic compound having at least two hydroxyl groups within its molecule and the boiling point more than 190 °C. Coating the surface of manganese dioxide with this organic compound improves its heat resistance, and can significantly prevent decrease in activity as a hardener even after the manganese dioxide processed into a paste-like hardener is exposed to heat history, such as heat accelerated curing etc. The organic compound has at least two hydroxyl groups within its molecule, preferably has two or three hydroxyl groups. Since the organic compound has two or more hydroxyl groups within its molecule, oxidation action of the manganese dioxide can be maintained appropriately and storage stability can be increased.

The boiling point of the organic compound is preferably set to more than 190 °C, preferably not less than 190 °C but not more than 380 °C. Setting the boiling point of the organic compound more than 190 °C leads to safe protection of the surface and improvement of heat resistance of the manganese dioxide.

Furthermore, the organic compound is liquid at room temperature and thus can be easily coated on the surface of manganese dioxide. The room temperature herein means 20 °C. In addition, viscosity of the organic compound is preferably 1 to 500 mPa ·s and more preferably 20 - 400 mPa · s. Such a range of the viscosity of the organic compound enables uniform and easy coating on the surface of manganese dioxide. In this specification, the viscosity of the organic compound shall be determined by E-type viscometer under the condition of 20 °C and 50 rpm (revolution per minute).

This organic compound includes, for example, diethylene glycol, ethylene glycol, 1,5-pentanediol, polyethylene glycol, triethanolamine, diethanolamine, etc. Among them, diethylene glycol and triethanolamine are more preferable, since they have good workability. It is possible to use these organic compounds alone or with a combination of two or more kinds thereof.

The amount of the added organic compound may be preferably 0.1 to 20% by weight, more preferably 0.5 to 4% by weight, or further preferably 1 to 2% by weight with respect to the dried manganese dioxide.

A method of coating manganese dioxide with an organic compound may be, but not limited to, adding the organic compound, for example, when grinding the manganese dioxide. This method enables coating of the surface of the manganese dioxide with the organic compound, and at the same time, but also enables prevention of agglomeration of manganese dioxide powder with the organic compound acting as a dispersing aid, thereby appropriately controlling particle size of the manganese dioxide.

If the manganese dioxide coated with the organic compound as described above is used for a hardener, decrease in hardenability of the hardener can be prevented after the hardener in a paste-like state dispersed in a plasticizer is exposed to heat accelerated curing at the temperature of 70 °C for three days. Then, the hardener is mixed with a main agent including liquid polysulfide polymer, and A hardness of the resultant hardenable composition after 6 hours of the mixture can be set to preferably more than 9, more preferably more than 20. In the present invention, A hardness of the hardenable composition is the hardness of the hardenable composition required by a type A durometer based on JIS K6253.

For manganese dioxide coated with such an organic compound, not only the monoclinic cation-substituted birnessite manganese dioxide as described above, but also another manganese dioxide having the action to harden polysulfide polymer can be chosen. For other manganese dioxide, for example, orthorhombic sodium birnessite manganese dioxide ($Na_4Mn_{14}O_{27} \cdot 9H_2O$), monoclinic sodium birnessite manganese dioxide ($Na_{0.55}Mn_2O_4 \cdot 1.5H_2O$) and manganese dioxide having a birnessite structure or buserite structure activated by alkali treatment can be illustrated. Of course, in order to prevent swelling and decrease in strength of the hardened product after a long period of hot water immersion, the monoclinic cation-substituted birnessite manganese dioxide is preferable.

Interlayer distance of the manganese dioxide having the birnessite structure is about 7 Å, preferably 6.70-7.50 Å, more preferably 6.90-7.25 Å**.** The birnessite manganese dioxide includes a monoclinic sodium birnessite which uses activated natural birnessite mineral and birnessite obtained by chemical synthesis and is activated by alkali treatment. The birnessite obtained by chemical synthesis includes those obtained by a precipitation method, that is, those obtained by dropping an alkaline aqueous solution, such as caustic soda, into an aqueous solution, such as manganese chloride, manganese sulfate, and manganese nitrate in the presence of oxygen.

The manganese dioxide having a buserite structure has a larger amount of crystal water and longer interlayer distance than the birnessite structure. The interlayer distance is about 10 Å, preferably 7.50-11.50 Å**.** As the buserite manganese dioxide, natural buserite mineral and buserite obtained by chemical synthesis can be used. The buserite obtained by chemical synthesis includes those obtained by a precipitation method, that is, those obtained by dropping an alkaline aqueous solution, such as caustic soda, into an aqueous solution, such as manganese chloride, manganese sulfate, and manganese nitrate in the presence of oxygen.

The hardenable composition of the present invention can suppress swelling and decrease in strength of the hardened product during hot water immersion, since the hardenable composition contains the activated manganese dioxide including a low water-absorptive cation with a monoclinic birnessite structure and, liquid polysulfide. The volume swelling ratio of the hardened product after 10-day hot water immersion at the temperature of 80 °C, can be set preferably less than 20%, more preferably less than 10%. If manganese dioxide coated on its surface with an organic compound, which is liquid at room temperature and has at least two hydroxyl groups within its molecule and the boiling point more than 190 °C, is used as a hardener, decrease in hardenability of the hardener can be suppressed even after heat accelerated curing, thereby significantly improving the storage stability. Therefore, this hardener is preferable. In particular, if the hardener is cured at 70 °C for three days and then is mixed with a main agent including liquid polysulfide polymer, A hardness of the resultant hardenable composition after 6 hours of the mixture can be set to preferably more than 9.

The liquid polysulfide polymer used in the present invention is preferably shown by the following formula (2). $HS-(R-S_x)_n-R-SH$ (2) (However, R is a divalent or trivalent organic group containing $-O-CH_2-O-$bond, and n is an integer of 1-200, preferably an integer of 1-50. x is an integer of 1-5 and the average of x is 1-2.5).

In the above-mentioned formula (2), R is preferably an organic group containing $-O-CH_2-O-$bond and a straight chain alkylene group or a branched chain alkylene group. R may be more preferably an organic group containing $-O-CH_2-O-$bond and a branched chain alkylene group. A straight chain or a branched chain alkylene group is preferably 0-70 mol % with regard to the number of moles of $-O-CH_2-O-$bond.

R preferably contains more than 50 mol % of $-C_2H_4-O-CH_2-O-C_2H_4-$. More preferably, R contains more than 70 mol % of $-C_2H_4-O-CH_2-O-C_2H_4-$.

A branched alkylene group is preferably a multifunctional ingredient derived from a trihalo organic compound, and is an organic group shown in the following formula (3).

[ Compound 1 ]

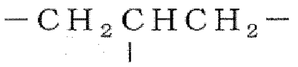

(3)

A trihaloalkyl compound is preferable as the branched trihalo organic compound, and trihalopropane is more preferable. Preferable halogen atoms of trihalopropane are chlorine, bromine, and iodine, and more preferable halogen atom is a chlorine atom.

The liquid polysulfide polymer used in the present invention is the one where n is an integer of 1-200, preferably an integer of 1-50 in said formula (2) . The liquid polysulfide polymer is liquid at room temperature and has a number average molecular weight of 500-50,000, more preferably 1,000-10,000.

Furthermore, x of said formula (2) is an integer of 1-5, preferably an integer of 1-3, and the average of x is 1-2.5. When, in particular, the average of x is less than 2, there is provided an effect of low viscosity, low glass transition temperature, and high heat resistance.

The liquid polysulfide polymer used in the present invention can be obtained by any method selected from a method including a conventional solid polysulfide formation and a method without including a solid polysulfide formation using phase transfer catalysis.

The hardenable composition of the present invention can contain any additive such as a plasticizer, a filler, a hardening accelerator, an adhesion promoter, and a pigment, as required, for the purpose of improving the workability and the physical properties after the hardening when the manganese dioxide is used as a hardener for liquid polysulfide polymer. Preferably, the hardenable composition may contain at least one selected from a filler, a plasticizer, and a hardening accelerator.

A plasticizer includes phthalic ester, such as dibutyl phthalate, butyl benzyl phthalate, and phthalic acid alkyl (C7-C9) benzyl, chlorinated paraffin, dipropylene glycol dibenzoate, diethylene glycol dibenzoate, triethylene glycol dibenzoate, dipropylene glycol monobenzoate, hydrogenated terphenyl, a hydrocarbon-based plasticizer, a halogen-terminal sulfur-containing polymer etc. A preferable plasticizer may be selected from at least one of phthalic ester,

chlorinated paraffin, dipropylene glycol dibenzoate, and a halogen-terminal sulfur-containing polymer.

While the amount of the added plasticizer will be decided depending on hardness, strength, and elongation of a hardened product, as well as the design of the viscosity of the hardenable composition before hardening, it may be preferably set 1 - 100 parts by weight with respect to liquid polysulfide polymer 100 parts by weight. If the amount of the added plasticizer exceeds 100 parts by weight, non-reactive liquid materials increases too much and thus hardness may not be maintained. Therefore, the added amount is more preferably 1 - 50 parts by weight and further preferably 1 - 30 parts by weight.

A filler includes an inorganic filler, for example, such as calcium carbonate, aluminium oxide, aluminium hydroxide, silica, silicate and sulfate, and carbon black etc. In addition, a filler includes a lightweight polymer filler such as polyamide or polyethylene; and a hollow filler such as a thermoplastic balloon (heat-expandable microcapsule), such as silica, acrylonitrile, methacrylonitrile, and vinylidene chloride, a thermosetting balloon, such as phenol and epoxy, an inorganic balloon, such as cilas, fly ash, glass, and alumina, etc. A preferable filler may be selected from at least one of carbon black, calcium carbonate, silica, and a micro balloon. Two or more kinds of fillers may be used, and any filler may use those treated on its surface with fatty acid, resin acid, a surfactant, a silane coupling agent, paraffin or the like.

Furthermore, heavy calcium carbonate and colloid calcium carbonate are preferable for calcium carbonate. Generally, heavy calcium carbonate is a calcium carbonate obtained in a desired particle size by mechanically grinding and classifying a limestone ore. Colloid calcium carbonate is a calcium carbonate obtained in a desired particle size and shape by performing mixed combustion of a limestone ore with coke etc., temporarily preparing calcium oxide (quicklime), then rendering it react with water in order to produce a calcium hydroxide (slaked lime), and rendering the calcium hydroxide react with carbon dioxide gas generated at the time of calcination.

The amount of the added filler is preferably 0.1 - 500 parts by weight with respect to liquid polysulfide polymer 100 parts by weight. When the amount of the added filler is less than 0.1 part by weight, it does not produce well-reinforced hardening. When the added amount is greater than 500 parts by weight, the viscosity of the hardenable composition becomes higher and thus workability decreases. Therefore, it is not preferable. More preferably, it is 1 - 300 parts by weight, further preferably, 10 - 200 parts by weight, and still more preferably, 30 - 60 parts by weight.

A hardening accelerator includes a vulcanization accelerator, such as an aldehyde ammonia and aldehydeamine based, a thio urea based, a guanidinium based, a thiazole based, a sulfenamide based, a thiuram based, a dithiocarbamate based, and a xanthate based. More specifically, it includes tris (dimethylamino methyl)phenol, diphenylguanidine, tetramethyl thiuram disulfide, tetraethylthiuram disulfide, tetrabutyl thiuram disulfide, hexamethylenetetramine and the like. A preferable hardening accelerator includes at least one selected from a thiuram based hardening accelerator and a guanidinium based hardening accelerator. Two or more kinds of the vulcanization accelerators described above may be used.

The amount of the added hardening accelerator will be determined depending on hardening rate of the hardenable composition as well as operating temperature, but may be preferably 1 - 10 parts by weight with respect to liquid polysulfide polymer 100 parts by weight. If the amount of the added hardening accelerator exceeds 10 parts by weight, the remaining accelerator which did not participate in the reaction, can slow down the performance of the hardened product. More preferably, it is 1 - 5 parts by weight, and further preferably 1 - 3 parts by weight.

An adhesion promoter includes a silane coupling agent containing a hydrolytic silyl group and a reactive organic functional group. Specifically, it includes vinyl trimethoxysilane, vinyl triethoxysilane, 2-(3, 4 epoxy cyclohexyl) ethyl trimethoxysilane, 3-glycidoxypropyltrimethoxysilane, 3-glycidoxypropylmethyl diethoxysilane, 3-glycidoxypropyltriethoxysilane, p-styryltrimethoxysilane, 3-methacryloxypropylmethyldimethoxysilane, 3-metacryloxypropyltrimethoxy silane, 3-methacryloxypropylmethyldiethoxysilane, 3-metacryloxypropyltriethoxysilane, 3-acryloxypropyltrimethoxysilane, N-2(aminoethyl)3-aminopropylmethyldimethoxysilane, N-2(aminoethyl)3-aminopropyltrimethoxy silane, N-2(aminoethyl)3-aminopropyltriethoxysilane, 3-aminopropyltrimethoxy silane, 3-aminopropyltriethoxysilane, 3-triethoxysilyl -N-(1,3-dimethyl- butylidene) propylamine, N-phenyl-3-aminopropyltrimethoxy silane, 3-mercaptopropylmethyldimethoxysilane, 3-mercaptopropyltrimethoxy silane, bis(triethoxysilylpropyl)tetrasulfide and the like. Furthermore, terminal trimethoxysilane modified polysulfide polymer obtained by reacting and synthesizing a polysulfide polymer, "Thiokol LP -3" and 3-glydoxypropyltrimethoxy silane can be used as a silane coupling agent. Two or more kinds of these silane coupling agents may be used.

The hardened product obtained with the hardenable composition of the present invention has excellent oil resistance, weather resistance, water tightness, and airtightness, and has the feature that the swelling of volume during the hot water immersion is very small. These features are preferable for a sealing material, an adhesive, a coating material, etc. In particular, the feature of very small volume swelling during the hot water immersion is the best for sealing materials for multiple glass required for durability to water stored in the sash. Conventional polysulfide based multiple glass sealing material using manganese dioxide as a hardener, which has the the greatest share in the world's market, has more than 20% volume swelling ratio after a 10-day hot water immersion at 80 °C. Therefore, in order to improve the durability of a polysulfide based sealing material, it is preferable to suppress the volume swelling ratio 10 days after 80 °C hot water immersion to less than 20 %. More preferably, the volume swelling ratio 10 days after 80 °C hot water

immersion is less than 10%.

There are a variety of methods for measuring a volume swelling ratio. A method for finding the volume based on the weight in the air and the weight in water and finding a volume swelling change ratio before and after hot water immersion is simple and precise. The form of a sample needs to be thin so that the sample may be easily influenced by the immersion, but it is preferable to adjust the form to a less than 2 mm thick sheet and a more than 30x30 mm area, considering reproducibility of data.

[EXAMPLES]

The present invention will be set forth in detail with reference to the following examples. A "part(s)" given in the following is a "part(s) by weight" of a weight standard, unless otherwise noticed.

For identifying the crystal structure and calculating the interlayer distance of manganese dioxide, powder X-ray diffraction (X'Pert PRO MRD produced by Spectris Co., Ltd.) was performed, thereby obtaining a X-ray diffraction chart. The crystal structure was identified by peak comparison with a standard diffraction chart and the interlayer distance was calculated on the assumption that interplanar spacing of peaks to be indexed to 001 reflection corresponds to the interlayer distance of a birnessite structure.

For calculating a chemical composition ratio, a quantitative determination is performed by an atomic absorption method for Na, an oxidation-reduction-titration method for Mn, and ICP emission spectrochemical analysis (the ICP-AES method) for the other metals. The chemical-analysis result described in Table 1 shows the content (% of the weight) of each metal in manganese dioxide.

[Synthesis Example 1]

Prepare an aqueous solution (A) by adding to 3000 parts of distilled water and dissolving 188.7 parts of manganese chloride dihydrate, and an aqueous solution (B) consisting of 825 parts of caustic soda, 216.2 parts of hydrogen peroxide, and 3750 parts of distilled water. Both aqueous solutions (A) and (B) were kept at 10 °C or less, and the aqueous solution (B) was added into the aqueous solution (A) over 120 minutes, while stirred at 800 revolutions per minute (rpm). After the addition, the suspension was stirred for 5 hours. Then, the suspension was filtered and washed with water until conductivity of the filtrate becomes 100-microsiemens ($\mu$S/cm) to obtain a filtered product (1). The filtered product was collected and dried at 80 °C for 10.5 hours, and then ground in a mortar to obtain powder sample of the Synthesis

Example 1.

X-ray diffraction chart of the obtained powder sample is shown in figure 1 (a). For comparison, a standard X-ray diffraction chart of monoclinic sodium birnessite $Na_{0.55}Mn_2O_4 \cdot 1.5H_2O$ is shown in Figure 1 (b) and a standard X-ray diffraction chart of orthorhombic sodium birnessite $Na_4Mn_{14}O_{27} \cdot 9H_2O$ is shown in figure 1 (c). In the figure 1(a), apparent peaks are found at about 12.4 degree and about 25.0 degree. These peaks match peaks of the monoclinic sodium birnessite $Na_{0.55}Mn_2O_4 \cdot 1.5H_2O$ shown in figure 1 (b) and thus each of them are indexed to 001 Reflection of 7.13 Å of interplanar spacing and 002 Reflection of 3.56 Å of interplanar spacing.

In contrast, in the X-ray diffraction chart of the orthorhombic sodiumbirnessite $Na_4Mn_{14}O_{27} \cdot 9H_2O$ of figure 1 (c), a peak to be indexed to 120 Reflection at about 15.8 degree, which is not found in the figure 1 (a), and a peak intensity ratio at about 12.4 degree and at about 25.0 degree differs from that of figure 1 (a). From these findings, the sample of the Synthesis Example 1 of figure 1 (a) has a monoclinic birnessite structure, instead of an orthorhombic birnessite structure. Moreover, in the monoclinic birnessite structure, interplanar spacing of a peak at about 12.4 degree to be indexed to 001 Reflection corresponds to the interlayer distance, and thus the interlayer distance is found to be 7.13 Å**.** The chemical composition ratio of the Synthesis Example 1 is shown in Table 1.

From these findings, the Synthesis Example 1 is a monoclinic sodium birnessite $Na_{0.55}Mn_2O_4 \cdot 1.5H_2O$ monolayer containing 2. 93 % by weight of sodium.

[Synthesis Example 2]

400 parts of the filtered product (1) similarly obtained in the Synthesis Example 1 was added into a previously-prepared aqueous solution consisting of 441 parts of calcium chloride dihydrate and 3000 parts of distilled water, and was stirred for 24 hours. Next, the obtained suspension was filtered and washed with water until conductivity of the filtrate becomes 100-microsiemens ($\mu$S/cm). Then, the filtered product was collected and dried at 80 °C for 10.5 hours, and then ground in a mortar to obtain a sample of the Synthesis Example 2.

X-ray diffraction chart of the obtained sample of the Synthesis Example 2 is shown in figure 2 (a). For comparison,

a standard X-ray diffraction chart of monoclinic sodium birnessite $Na_{0.55}Mn_2O_4 \cdot 1.5H_2O$ is shown in figure 2 (b) and a standard X-ray diffraction chart of orthorhombic sodium birnessite $Na_4Mn_{14}O_27 \cdot 9H_2O$ is shown in figure 2 (c). The figure 2(a) was analyzed similarly as the figure 1(a). The analysis shows that the sample obtained in the Synthesis Example 2 has a monoclinic birnessite structure and the interlayer distance is 7.01 Å. The chemical composition ratio is shown in Table 1. From these findings, the Synthesis Example 2 is a monoclinic birnessite which contains 0.01 % by weight of sodium and has calcium ion introduced between the layers.

[Synthesis Example 3]

400 parts of the filtered product (1) similarly obtained in the Synthesis Example 1 was added into a previously-prepared aqueous solution consisting of 370 parts of acetic acid and 14700 parts of distilled water, and was stirred for 12 hours. Next, the obtained suspension was filtered and washed with water until conductivity of the filtrate becomes 100-microsiemens ($\mu$S/cm). Then, the filtered product was collected and dried at 80 °C for 2.5 hours, and then ground in a mortar to obtain a sample. This sample was estimated similarly as the Synthesis Example 1. The interlayer distance and the chemical composition ratio are shown in Table 1. From these findings, the Synthesis Example 3 is a monoclinic birnessite which contains 0.07 % by weight of sodium and has proton introduced between the layers.

[Synthesis Example 4]

400 parts of the filtered product (1) similarly obtained in the Synthesis Example 1 was added into a previously-prepared aqueous solution consisting of 675.7 parts of ammonium chloride and 3000 parts of distilled water, and was stirred for 12 hours. Next, the obtained suspension was filtered and washed with water until conductivity of the filtrate becomes 100-microsiemens ($\mu$S/cm). Then, the filtered product was collected and dried at 30 °C for 30 hours, and then ground in a mortar to obtain a sample. This sample was estimated similarly as the Synthesis Example 1. The interlayer distance and the chemical composition ratio are shown in Table 1. From these findings, the Synthesis Example 4 is a monoclinic birnessite which contains 0.07% by weight of sodium and has ammonium ion introduced between the layers.

[Synthesis Example 5]

400 parts of the filtered product (1) similarly obtained in the Synthesis Example 1 was added into a previously-prepared aqueous solution consisting of 132 parts of calcium chloride dihydrate and 3000 parts of distilled water, and was stirred for 24 hours. Next, the obtained suspension was filtered and washed with water until conductivity of the filtrate becomes 100-microsiemens ($\mu$S/cm). Then, the filtered product was collected and dried at 80 °C for 10.5 hours, and then ground in a mortar to obtain a sample. This sample was estimated similarly as the Synthesis Example 1. The interlayer distance and the chemical composition ratio are shown in Table 1. From these findings, the Synthesis Example 5 is a monoclinic birnessite which contains 0.09% by weight of sodium and has calcium ion introduced between the layers.

[Synthesis Example 6]

400 parts of the filtered product (1) similarly obtained in the Synthesis Example 1 was added into a previously-prepared aqueous solution consisting of 132 parts of calcium chloride dihydrate and 3000 parts of distilled water, and was stirred for 9 hours. Next, the obtained suspension was filtered and washed with water until conductivity of the filtrate becomes 100-microsiemens ($\mu$S/cm). Then, the filtered product was collected and dried at 80 °C for 10.5 hours, and then ground in a mortar to obtain a sample. This sample was estimated similarly as the Synthesis Example 1. The interlayer distance and the chemical composition ratio are shown in Table 1. From these findings, the Synthesis Example 6 is a monoclinic birnessite which contains 0.16% by weight of sodium and has calcium ion introduced between the layers.

[Synthesis Example 7]

400 parts of the filtered product (1) similarly obtained in the Synthesis Example 1 was added into a previously-prepared aqueous solution consisting of 66 parts of calcium chloride dihydrate and 3000 parts of distilled water, and was stirred for 10 hours. Next, the obtained suspension was filtered and washed with water until conductivity of the filtrate becomes 100-microsiemens ($\mu$S/cm). Then, the filtered product was collected and dried at 80 °C for 10.5 hours, and then ground in a mortar to obtain a sample. This sample was estimated similarly as the Synthesis Example 1. The interlayer distance and the chemical composition ratio are shown in Table 1. From these findings, the Synthesis Example 7 is a monoclinic birnessite which contains 0.30% by weight of sodium and has calcium ion introduced between the layers.

[Synthesis Example 8]

400 parts of the filtered product (1) similarly obtained in the Synthesis Example 1 was added into a previously-prepared aqueous solution consisting of 66 parts of calcium chloride dihydrate and 3000 parts of distilled water, and was stirred for 4.5 hours. Next, the obtained suspension was filtered and washed with water until conductivity of the filtrate becomes 100-microsiemens ($\mu$S/cm). Then, the filtered product was collected and dried at 80 °C for 10.5 hours, and then ground in a mortar to obtain a sample. This sample was estimated similarly as the Synthesis Example 1. The interlayer distance and the chemical composition ratio are shown in Table 1. From these findings, the Synthesis Example 8 is a monoclinic birnessite which contains 0.59 % by weight of sodium and has calcium ion introduced between the layers.

[Synthesis Example 9]

400 parts of the filtered product (1) similarly obtained in the Synthesis Example 1 was added into a previously-prepared aqueous solution consisting of 609.9 parts of magnesium chloride hexahydrate and 3000 parts of distilled water, and was stirred for 24 hours. Next, the obtained suspension was filtered and washed with water until conductivity of the filtrate becomes 100-microsiemens ($\mu$S/cm). Then, the filtered product was collected and dried at 100 °C for 60 hours, and then ground in a mortar to obtain a sample. This sample was estimated similarly as the Synthesis Example 1. The interlayer distance and the chemical composition ratio are shown in Table 1. From these findings, the Synthesis Example 9 is a monoclinic birnessite which contains 0.01% by weight of sodium and has magnesium ion introduced between the layers.

[Synthesis Example 10]

400 parts of the filtered product (1) similarly obtained in the Synthesis Example 1 was added into a previously-prepared aqueous solution consisting of 811.1 parts of Iron (III) chloride dihydrate and 3000 parts of distilled water, and was stirred for 24 hours. Next, the obtained suspension was filtered and washed with water until conductivity of the filtrate becomes 100-microsiemens ($\mu$ S/cm). Then, the filtered product was collected and dried at 80 °C for 10.5 hours, and then ground in a mortar to obtain a sample. This sample was estimated similarly as the Synthesis Example 1. The interlayer distance and the chemical composition ratio are shown in Table 1. From these findings, the Synthesis Example 10 is a monoclinic birnessite which contains 0.00 % by weight of sodium and has iron (III) ion introduced between the layers.

[Synthesis Example 11]

400 parts of the filtered product (1) similarly obtained in the Synthesis Example 1 was added into a previously-prepared aqueous solution consisting of 1114.1 parts of lanthanum chloride dihydrate and 3000 parts of distilled water, and was stirred for 24 hours. Next, the obtained suspension was filtered and washed with water until conductivity of the filtrate becomes 100-microsiemens ($\mu$ S/cm). Then, the filtered product was collected and dried at 80 °C for 10.5 hours, and then ground in a mortar to obtain a sample. This sample was estimated similarly as the Synthesis Example 1. The interlayer distance and the chemical composition ratio are shown in Table 1. From these findings, the Synthesis Example 11 is a monoclinic birnessite which contains 0.01 % by weight of sodium and has lanthanum ion introduced between the layers.

[Synthesis Example 12]

400 parts of the filtered product (1) similarly obtained in the Synthesis Example 1 was added into a previously-prepared aqueous solution consisting of 408.9 parts of zinc chloride and 3000 parts of distilled water, and was stirred for 24 hours. Next, the obtained suspension was filtered and washed with water until conductivity of the filtrate becomes 100-microsiemens ($\mu$ S/cm). Then, the filtered product was collected and dried at 80 °C for 10.5 hours, and then ground in a mortar to obtain a sample. This sample was estimated similarly as the Synthesis Example 1. The interlayer distance and the chemical composition ratio are shown in Table 1. From these findings, the Synthesis Example 12 is a monoclinic birnessite which contains 0.07 % by weight of sodium and has zinc ion introduced between the layers.

[Synthesis Example 13]

400 parts of the filtered product (1) similarly obtained in the Synthesis Example 1 was added into a previously-prepared aqueous solution consisting of 732.8 parts of barium chloride dihydrate and 3000 parts of distilled water, and was stirred for 24 hours. Next, the obtained suspension was filtered and washed with water until conductivity of the filtrate becomes 100-microsiemens ($\mu$ S/cm). Then, the filtered product was collected and dried at 80 °C for 10.5 hours,

and then ground in a mortar to obtain a sample. This sample was estimated similarly as the Synthesis Example 1. The interlayer distance and the chemical composition ratio are shown in Table 1. From these findings, the Synthesis Example 13 is a monoclinic birnessite which contains 0.02 % by weight of sodium and barium ion introduced between the layers.

[Synthesis Example 14]

400 parts of the filtered product (1) similarly obtained in the Synthesis Example 1 were added into a previously -prepared aqueous solution consisting of 799.9 parts of strontium chloride hexahydrate and 3000 parts of distilled water and stirred for 24 hours. Next, the obtained suspension was filtered and washed with water until conductivity of the filtrate became 100 microsiemens ($\mu$S/cm). Then the filtered product was collected, dried at 80 °C for 10.5 hours, and then ground in a mortar to obtain a sample. This sample was estimated similarly as the Synthesis Example 1. The interlayer distance and the chemical composition ratio are shown in Table 1. From these findings, the Synthesis Example 14 is a monoclinic birnessite which contains 0.01 % by weight of sodium and a strontium ion introduced between the layers.

[Synthesis Example 15]

400 parts of the filtered product (1) similarly obtained in the Synthesis Example 1 were added into a previously -prepared aqueous solution consisting of 713.1 parts of nickel chloride dihydrate and 3000 parts of distilled water and stirred for 24 hours. Next, the obtained suspension was filtered and washed with water until conductivity of the filtrate became 100 microsiemens ($\mu$S/cm). And then the filtered product was collected, dried at 100 °C for 68 hours, and then ground in the mortar to obtain a sample. This sample was estimated similarly as the Synthesis Example 1. The interlayer distance and the chemical composition ratio are shown in Table 1. From these findings, the Synthesis Example 15 is a monoclinic birnessite which contains 0.01 % by weight of sodium and a nickel ion introduced between the layers.

| | *Interlayer Distance (Å) | Result of Chemical Analysis (Content of Each Metal, Unit: % by Weight) | | | | | | | | | |
|---|---|---|---|---|---|---|---|---|---|---|---|
| | | Na | Ca | Mg | Fe | La | Zn | Ba | Sr | Ni | Mn |
| Synthesis Example 1 | 7.13 | 2.93 | 0.0 | 0.0 | 0.0 | 0.0 | 0.0 | 0.0 | 0.0 | 0.0 | 50.95 |
| Synthesis Example 2 | 7.01 | 0.01 | 5.46 | 0.0 | 0.0 | 0.0 | 0.0 | 0.0 | 0.0 | 0.0 | 50.95 |
| Synthesis Example 3 | 7.19 | 0.07 | 0.0 | 0.0 | 0.0 | 0.0 | 0.0 | 0.0 | 0.0 | 0.0 | 55.57 |
| Synthesis Example 4 | 7.14 | 0.07 | 0.0 | 0.0 | 0.0 | 0.0 | 0.0 | 0.0 | 0.0 | 0.0 | 53.08 |
| Synthesis Example 5 | 7.01 | 0.09 | 5.32 | 0.0 | 0.0 | 0.0 | 0.0 | 0.0 | 0.0 | 0.0 | 50.95 |
| Synthesis Example 6 | 7.01 | 0.16 | 5.19 | 0.0 | 0.0 | 0.0 | 0.0 | 0.0 | 0.0 | 0.0 | 50.95 |
| Synthesis Example 7 | 7.01 | 0.30 | 4.91 | 0.0 | 0.0 | 0.0 | 0.0 | 0.0 | 0.00 | 0.0 | 50.95 |
| Synthesis Example 8 | 7.01 | 0.59 | 4.36 | 0.0 | 0.0 | 0.0 | 0.0 | 0.0 | 0.0 | 0.00 | 50.95 |
| Synthesis Example 9 | 7.16 | 0.01 | 0.0 | 3.13 | 0.0 | 0.0 | 0.0 | 0.0 | 0.0 | 0.0 | 50.01 |
| Synthesis Example 10 | 6.97 | 0.00 | 0.0 | 0.0 | 8.67 | 0.0 | 0.0 | 0.0 | 0.0 | 0.0 | 47.73 |
| Synthesis Example 11 | 7.01 | 0.01 | 0.0 | 0.0 | 0.0 | 9.72 | 0.0 | 0.0 | 0.0 | 0.0 | 47.54 |

| | *Interlayer Distance (Å) | Result of Chemical Analysis (Content of Each Metal, Unit: % by Weight) | | | | | | | | | |
|---|---|---|---|---|---|---|---|---|---|---|---|
| | | Na | Ca | Mg | Fe | La | Zn | Ba | Sr | Ni | Mn |
| Synthesis Example 12 | 7.00 | 0.07 | 0.0 | 0.0 | 0.0 | 0.0 | 7.74 | 0.0 | 0.0 | 0.0 | 51.16 |
| Synthesis Example 13 | 7.03 | 0.02 | 0.0 | 0.0 | 0.0 | 0.0 | 0.0 | 16.93 | 0.0 | 0.0 | 47.92 |
| Synthesis Example 14 | 6.96 | 0.01 | 0.0 | 0.0 | 0.0 | 0.0 | 0.0 | 0.0 | 11.42 | 0.0 | 48.61 |
| Synthesis Example 15 | 7.04 | 0.01 | 0.0 | 0.0 | 0.0 | 0.0 | 0.0 | 0.0 | 0.0 | 8.49 | 47.73 |
| Commercial Product (1) | 7.10 | 2.70 | 0.58 | 0.30 | 0.36 | 0.00 | 0.02 | 0.47 | 0.03 | 0.01 | 52.42 |
| **Commercial Product (2) | No Layer Structure | 0.20 | No Data | No Data | 0.01 | No Data | No Data | No Data | No Data | 0.00 | 60.58 |

*The interlayer distance corresponds to an interplanar spacing of a peak indexed to 001 Reflection in a XRD diffraction pattern.

**The commercial product (2) shows values extracted from technical data.

An interlayer distance of each sample in the Synthesis Examples 1-15 and the contents of each metal are shown in Table 1. Also, we confirmed that any of the samples in the Synthesis Examples 1 to 15 are manganese dioxides having the interlayer distance of about 7 Å and having a monoclinic birnessite single layer structure. Moreover, the sodium content between the layers of each sample in the Synthesis Examples 2-5 and 9-15 is 0.15 % by weight or less.

Additionally, as a result of evaluating the crystal structure, an interlayer distance, and a chemical composition ratio of manganese dioxide (Type FA manufactured by Honeywell) as a commercial product (1) as in the Synthesis Example 1, we conformed that the crystal structure of the commercial product (1) is a monoclinic birnessite single layer structure and listed the chemical composition ratio in Table 1.

As a commercial product (2), manganese dioxide (FMH manufactured by TOSOH CORP.) having a monoclinic Ramsdellite structure was prepared, which was treated with alkali but had no layer structures. The crystal structure of the manganese dioxide of the commercial product (2) is a monoclinic Ramsdellite structure, and the chemical composition ratio described in the technical data is listed in Table 1.

[Synthesis Example 16]

To 100 parts of the commercial product (1) (manganese dioxide Type-FA manufactured by Honeywell, monoclinic sodium birnessite manganese dioxide), 2.0 parts of diethylene glycol (manufactured by the Wako Pure Chemical Industries, Ltd., the number of hydroxyl groups: 2, boiling point: 245 °C, viscosity at 20 °C measured by E type viscometer: 25.4 mPa · s) was added and ground in an automatic mortar for 1 hour to give manganese dioxide in the Synthesis Example 16. An interlayer distance and a chemical composition ratio of the manganese dioxide in this Synthesis Example 16 are shown in Table 2. The manganese dioxide in the Synthesis Example 16 is a surface treated powder coated with 2.0% by weight of the diethylene glycol to the monoclinic sodium birnessite manganese dioxide.

[Synthesis Example 17]

To 100 parts of the commercial product (1), 2.0 parts of triethanolamine (manufactured by the Wako Pure Chemical Industries, Ltd., the number of hydroxyl groups: 3, boiling point: 360 °C, viscosity at 20 °C measured by E type viscometer: 370.1 mPa · s) was added and ground in the automatic mortar for 1 hour to give manganese dioxide in the Synthesis Example 17. An interlayer distance and a chemical composition ratio of the manganese dioxide in this Synthesis Example 17 are shown in Table 2. The manganese dioxide in the Synthesis Example 17 is a powder obtained by its surface coating with 2.0% by weight of triethanolamine with respect to the monoclinic sodium birnessitee manganese dioxide.

[Synthesis Example 18]

400 parts of the obtained filtered product (1) similarly obtained in the Synthesis Example 1 were added into a previously -prepared aqueous solution containing 370 parts of acetate and 14,700 parts of distilled water, and stirred for 12 hours. Next, the obtained suspension was filtered and washed with water until conductivity of the filtrate became 100 microsiemens ($\mu$S/cm) . Then the filtered product was collected, and dried at 150 °C for 12 hours to obtain a dried product (1). The obtained dried product (1) was ground in the mortar to give manganese dioxide in the Synthesis Example 18. The interlayer distance and the chemical composition ratio of the manganese dioxide in this Synthesis Example 18 are shown in Table 2. From these findings, the manganese dioxide in the Synthesis Example 18 is a monoclinic birnessite which contains 0.07 % by weight of sodium and a proton introduced between the layers.

[Synthesis Example 19]

To 100 parts of the dried product (1) obtained as in the Synthesis Example 18, 1.0 part of diethylene glycol was added and ground in the automatic mortar for 1 hour to give manganese dioxide in the Synthesis Example 19. An interlayer distance and a chemical composition ratio of the manganese dioxide in this Synthesis Example 19 are shown in Table 2.

From these results, the manganese dioxide in the Synthesis Example 19 is a powder obtained by its surface coating with 1.0% by weight of the diethylene glycol with respect to 0.07 % by weight of monoclinic birnessite which contains sodium and a proton introduced between the layers.

[Synthesis Example 20]

To 100 parts of the dried product (1) obtained as in the Synthesis Example 18, 2.0 parts of diethylene glycol were added and ground in the automatic mortar for 1 hour to give manganese dioxide in the Synthesis Example 20. An

interlayer distance and a chemical composition ratio of the manganese dioxide in this Synthesis Example 20 are shown in Table 2.

From these results, the manganese dioxide in the Synthesis Example 19 is a powder obtained by its surface coating with 2.0% by weight of the diethylene glycol with respect to 0.07 % by weight of monoclinic birnessite which contains sodium and a proton introduced between the layers.

[Synthesis Example 21]

To 100 parts of the dried product (1) obtained as in the Synthesis Example 18, 1.0 part of triethanolamine was added and ground in the automatic mortar for 1 hour to give manganese dioxide in the Synthesis Example 21. An interlayer distance and a chemical composition ratio of the manganese dioxide in this Synthesis Example 21 are shown in Table 2.

From these results, the manganese dioxide in the Synthesis Example 21 is a powder obtained by its surface coating with 1.0% by weight of the triethanolamine with respect to 0.07 % by weight of monoclinic birnessite which contains sodium and a proton introduced between the layers.

[Synthesis Example 22]

To 100 parts of the dried product (1) obtained as in the Synthesis Example 18, 2.0 parts of triethanolamine were added and ground in the automatic mortar for 1 hour to give manganese dioxide in the Synthesis Example 22. An interlayer distance and a chemical composition ratio of the manganese dioxide in this Synthesis Example 22 are shown in Table 2.

From these results, the manganese dioxide in the Synthesis Example 22 is a powder obtained by its surface coating with 2.0% by weight of the triethanolamine with respect to 0.07 % by weight of monoclinic birnessite which contains sodium and a proton introduced between the layers.

[Synthesis Example 23]

To 100 parts of the manganese dioxide obtained in the Synthesis Example 18 (an interlayer distance: 7.19 Å, a sodium content: 0.07% by weight, and a monoclinic birnessite containing a proton introduced between the layers), 2 parts of dodecane (manufactured by the Wako Pure Chemical Industries, Ltd., the number of hydroxyl groups: none, boiling point: 215 °C, viscosity at 20 °C measured by E type viscometer: 1. 4 mPa · s) were added, and ground in the automatic mortar for 1 hour to give manganese dioxide in the Synthesis Example 23. An interlayer distance and a chemical composition ratio of the manganese dioxide in this Synthesis Example 23 are shown in Table 2.

The manganese dioxide in the Synthesis Example 23 is a powder obtained by its surface coating with 2.0% by weight of the dodecane with respect to 0.07 % by weight of monoclinic birnessite which contains sodium and a proton introduced between the layers.

[Synthesis Example 24]

To 100 parts of the manganese dioxide obtained in the Synthesis Example 18 (an interlayer distance: 7.19 Å, a sodium content: 0.07% by weight, and a monoclinic birnessite containing a proton introduced between the layers), 2 parts of ethanol (manufactured by the Wako Pure Chemical Industries, Ltd., the number of hydroxyl groups: 1, boiling point: 78 °C, viscosity at 20 °C measured by E type viscometer: 1.2 mPa · s) were added, and ground in the automatic mortar for 1 hour to give manganese dioxide in the Synthesis Example 24. An interlayer distance and a chemical composition ratio of the manganese dioxide in this Synthesis Example 24 are shown in Table 2.

The manganese dioxide in the Synthesis Example 24 is a powder obtained by its surface coating with 2.0% by weight of the ethanol with respect to 0.07 % by weight of monoclinic birnessite which contains sodium and a proton introduced between the layers.

[Synthesis Example 25]

To 100 parts of the manganese dioxide obtained in the Synthesis Example 18 (an interlayer distance: 7.19 Å, a sodium content: 0.07% by weight, and a monoclinic birnessite containing a proton introduced between the layers), 2 parts of 1-hexanol (manufactured by the Wako Pure Chemical Industries, Ltd., the number of hydroxyl groups: 1, boiling point: 158 °C, viscosity at 20 °C measured by E type viscometer: 4.4 mPa · s) were added, and ground in the automatic mortar for 1 hour to give manganese dioxide in the Synthesis Example 25. An interlayer distance and a chemical composition ratio of the manganese dioxide in this Synthesis Example 25 are shown in Table 2.

The manganese dioxide in the Synthesis Example 25 is a powder obtained by its surface coating with 2.0% by weight of the 1-hexanol with respect to 0.07 % by weight of monoclinic birnessite which contains sodium and a proton introduced between the layers.

[Synthesis Example 26]

To 100 parts of the manganese dioxide obtained in the Synthesis Example 18 (an interlayer distance: 7.19 Å, a sodium content: 0.07% by weight, and a monoclinic birnessite containing a proton introduced between the layers), 2 parts of 1-heptanol (manufactured by the Wako Pure Chemical Industries, Ltd., the number of hydroxyl groups: 1, boiling point: 176 °C, viscosity at 20 °C measured by E type viscometer: 5.5 mPa · s) were added, and ground in the automatic mortar for 1 hour to give manganese dioxide in the Synthesis Example 26. An interlayer distance and a chemical composition ratio of the manganese dioxide in this Synthesis Example 26 are shown in Table 2.

The manganese dioxide in the Synthesis Example 26 is a powder obtained by its surface coating with 2.0% by weight of the 1-heptanol with respect to 0.07 % by weight of monoclinic birnessite which contains sodium and a proton introduced between the layers.

[Synthesis Example 27]

To 100 parts of the manganese dioxide obtained in the Synthesis Example 18 (an interlayer distance: 7.19 Å, a sodium content: 0.07% by weight, and a monoclinic birnessite containing a proton introduced between the layers), 2 parts of 1-dodecanol (manufactured by the Wako Pure Chemical Industries, Ltd., the number of hydroxyl groups: 1, boiling point: 259 °C, viscosity at 20 °C measured by E type viscometer: 15.5 mPa · s) were added, and ground in the automatic mortar for 1 hour to give manganese dioxide in the Synthesis Example 27. An interlayer distance and a chemical composition ratio of the manganese dioxide in this Synthesis Example 27 are shown in Table 2.

The manganese dioxide in the Synthesis Example 27 is a powder obtained by its surface coating with 2.0% by weight of the 1-dodecanol with respect to 0.07 % by weight of monoclinic birnessite which contains sodium and a proton introduced between the layers.

[Synthesis Example 28]

To 100 parts of the manganese dioxide obtained in the Synthesis Example 18 (an interlayer distance: 7.19 Å, a sodium content: 0.07% by weight, and a monoclinic birnessite containing a proton introduced between the layers), 2 parts of propylene glycol (manufactured by the Wako Pure Chemical Industries, Ltd., the number of hydroxyl groups: 2, boiling point: 188 °C, viscosity at 20 °C measured by E type viscometer: 34.0 mPa · s) were added, and ground in the automatic mortar for 1 hour to give manganese dioxide in the Synthesis Example 28. An interlayer distance and a chemical composition ratio of the manganese dioxide in this Synthesis Example 28 are shown in Table 2.

The manganese dioxide in the Synthesis Example 28 is a powder obtained by its surface coating with 2.0% by weight of the propylene glycol with respect to 0.07 % by weight of monoclinic birnessite which contains sodium and a proton introduced between the layers.

[Synthesis Example 29]

400 parts of the filtered product (1) similarly obtained in the Synthesis Example 1 were added into a previously-prepared aqueous solution containing 441 parts of calcium chloride dihydrate and 3, 000 parts of distilled water, and stirred for 24 hours. Next, the obtained suspension was filtered and washed with water until conductivity of the filtrate became 100 microsiemens ($\mu$S/cm) . Then the filtered product was collected, and dried at 80 °C for 10.5 hours to obtain a dried product (2). The obtained dried product (2) was ground in the mortar to give manganese dioxide in the Synthesis Example 29. The interlayer distance and the chemical composition ratio of the manganese dioxide in this Synthesis Example 29 are shown in Table 2.

From these results, the manganese dioxide in the Synthesis Example 29 is a monoclinic birnessite which contains 0.01 % by weight of sodium and a calcium ion introduced between the layers.

[Synthesis Example 30]

To 100 parts of the dried product (2) obtained as in the Synthesis Example 29, 2.0 parts of diethylene glycol were added and ground in the automatic mortar for 1 hour to give manganese dioxide in the Synthesis Example 30. An interlayer distance and a chemical composition ratio of the manganese dioxide in this Synthesis Example 30 are shown in Table 2.

From these results, the manganese dioxide in the Synthesis Example 30 is a powder obtained by its surface coating with 2.0% by weight of diethylene glycol with respect to 0.02 % by weight of monoclinic birnessite which contains sodium and a calcium ion introduced between the layers.

[Synthesis Example 31]

To 100 parts of the dried product (2) obtained as in the Synthesis Example 29, 2.0 parts of triethanolamine were added and ground in the automatic mortar for 1 hour to give manganese dioxide in the Synthesis Example 31. An interlayer distance and a chemical composition ratio of the manganese dioxide in this Synthesis Example 31 are shown in Table 2.

From these results, the manganese dioxide in the Synthesis Example 31 is a powder obtained by its surface coating with 2.0% by weight of triethanolamine with respect to 0.02 % by weight of monoclinic birnessite which contains sodium and a calcium ion introduced between the layers.

| | | *Interlayer Distance (Å) | Chemical Analysis Result (Content of Each Metal) | | | Liquid Organic Compound At Room Temperature | | | |
|---|---|---|---|---|---|---|---|---|---|
| | | | Na (wt %) | Ca (wt %) | Mn (wt %) | Type | Boiling Point (°C) | Viscosity (mP · s) | Added Amount (wt %) |
| Sodium Birnessite Structure Manganese Dioxide | Commercial Product (1) | 7.10 | 2.70 | 0.58 | 52.42 | - | - | - | - |
| | Synthesis Example 16 | 7.10 | 2.75 | 0.54 | 53.10 | DEG | 245 | 25.4 | 2.0 |
| | Synthesis Example 17 | 7.10 | 2.75 | 0.56 | 52.79 | TEA | 360 | 370.1 | 2.0 |
| $H^+$-Subsutituted Birnessite Structure Manganese Dioxide | Synthesis Example 18 | 7.19 | 0.07 | 0.00 | 55.57 | - | - | - | - |
| | Synthesis Example 19 | 7.00 | 0.07 | 0.00 | 55.90 | DEG | 245 | 25.4 | 1.0 |
| | Synthesis Example 20 | 7.00 | 0.07 | 0.00 | 56.20 | DEG | 245 | 25.4 | 2.0 |
| | Synthesis Example 21 | 6.90 | 0.07 | 0.00 | 56.40 | TEA | 360 | 370.1 | 1.0 |
| | Synthesis Example 22 | 7.00 | 0.07 | 0.00 | 56.10 | TEA | 360 | 370.1 | 2.0 |

| | | *Interlayer Distance (Å) | Chemical Analysis Result (Content of Each Metal) | | | Liquid Organic Compound At Room Temperature | | | |
|---|---|---|---|---|---|---|---|---|---|
| | | | Na (wt %) | Ca (wt %) | Mn (wt %) | Type | Boiling Point (°C) | Viscosity (mP · s) | Added Amount (wt %) |
| $H^+$-Subsutituted Birnessite Structure Manganese Dioxide | Synthesis Example 23 | 7.19 | 0.07 | 0.00 | 55.57 | Dodecane | 215 | 1.4 | 2.0 |
| | Synthesis Example 24 | 7.19 | 0.07 | 0.00 | 55.57 | Ethanol | 78 | 1.2 | 2.0 |
| | Synthesis Example 25 | 7.19 | 0.07 | 0.00 | 55.57 | 1-Hexanol | 158 | 4.4 | 2.0 |
| | Synthesis Example 26 | 7.19 | 0.07 | 0.00 | 55.57 | 1-Heptanol | 176 | 5.3 | 2.0 |
| | Synthesis Example 27 | 7.19 | 0.07 | 0.00 | 55.57 | 1-Dodecanol | 259 | 15.5 | 2.0 |
| | Synthesis Example 28 | 7.19 | 0.07 | 0.00 | 55.57 | Propylene Glycol | 188 | 34.0 | 2.0 |

| | | *Interlayer Distance (Å) | Chemical Analysis Result (Content of Each Metal) | | | Liquid Organic Compound At Room Temperature | | | |
|---|---|---|---|---|---|---|---|---|---|
| | | | Na (wt %) | Ca (wt %) | Mn (wt %) | Type | Boiling Point (°C) | Viscosity (mP · s) | Added Amount (wt %) |
| $Ca^{2+}$-Subsutituted Birnessite Structure Manganese Dioxide | Synthesis Example 29 | 7.01 | 0.01 | 5.46 | 50.95 | - | - | - | - |
| | Synthesis Example 30 | 7.00 | 0.02 | 5.52 | 49.50 | DEG | 245 | 25.4 | 1.0 |
| | Synthesis Example 31 | 7.00 | 0.02 | 5.48 | 50.00 | TEA | 360 | 370.1 | 1.0 |

In the table, DEG means diethylene glycol and TEA means triethanolamine.

Table 2 shows an interlayer distance of each sample of the commercial product (1) and the Synthesis Examples 16-31, the content of each metal, the types, and the added amounts of the used organic compounds for the surface-coated manganese dioxide. Also, we confirmed that any of the samples of the commercial product (1) and the Synthesis Examples 16 to 31 are manganese dioxides having an inter layer distance of about 7 Å and having a monoclinic birnessite single layer structure. Moreover, the sodium content between layers of each sample in the Synthesis Examples 18 to 31 is 0.15 % by weight or less.

[Example 1]

Based on the following compounding, a liquid polysulfide polymer (thiokol "LP - 23", manufactured by Toray Fine Chemicals Co., Ltd.), butyl benzyl phthalate, precipitated calcium carbonate, heavy calcium carbonate, and 3-glycidoxypropyltrimethoxysilane as main agents were mixed using a mixer. Moreover, the manganese dioxide in the Synthesis Example 2, butyl benzyl phthalate, a phthalate based plasticizer, tetramethylthiuram disulfide, heavy calcium carbonate, and SFR carbon as hardeners were kneaded using triple roll mills.

[Composition of Main Agents]

- 100 parts by weight of thiokol "LP - 23" (manufactured by Toray Fine Chemicals Co., Ltd.)
- 37 parts by weight of butyl benzyl phthalate (manufactured by Daihachi Chemical Industry Co., Ltd.)
- 65 parts by weight of precipitated calcium carbonate (Hakuenka CC manufactured by Shiraishi Calcium Kaisha, Ltd.)
- 90 parts by weight of heavy calcium carbonate (Whiten SSB Red manufactured by Shiraishi Calcium Kaisha, Ltd.)
- 3 parts by weight of 3-glycidoxypropyltrimethoxysilane (SH-6040 manufactured by Dow Corning Toray)

[Composition of Hardeners]

- 10 parts by weight of manganese dioxide (Synthesis Example 2)
- 2.5 parts by weight of butyl benzyl phthalate (manufactured by Daihachi Chemical Industry Co., Ltd.)
- 10.5 parts by weight of phthalate based plasticizer (Santicizer 278 manufactured by Ferro Corp.)
- 0.5 part by weight of tetramethylthiuram disulfide (NOCCELER TT manufactured by Ouchi Shinko Chemical Industrial Co., Ltd.)
- 5 parts by weight of heavy calcium carbonate (NCC#410 manufactured by Nitto Funka Kogyo K.K)
- 0.5 part by weight of SRF carbon

The main agents and the hardeners obtained above were kneaded well by hand to give a hardenable composition comprising the mixture thereof.

The obtained hardenable composition was sandwiched by iron plates adjusted to create a 2 mm gap and cured under 23 °C/ 50%/ RH atmosphere for 7 days. The obtained sheet was cut to obtain three specimens of 30 mm x 30 mm. After each specimen was immersed in hot water at 80 °C for 10 days, the volume swelling ratio was calculated by the following formula. Average values of the three specimens are shown as a volume swelling ratio in Table 3.

Volume swelling ratio (%) = [(w3-w4) - (w1-w2)] / (w1-w2) x 100 (Wherein, w1 is an initial weight in the air, w2 is an initial weight in water, w3 is a weight in the air after immersion, and w4 is a weight in water after immersion.)

[Examples 2 and 3]

Using the manganese dioxides in the Synthesis Examples 3 and 4 instead of the manganese dioxides in the Synthesis Example 2 of the Example 1 as a hardener, a specimen was prepared as in the Example 1, and its volume swelling ratio was calculated. The results are shown in Table 3.

[Comparative Example 1]

Using the manganese dioxide in the Synthesis Example 1 was used instead of the manganese dioxide in the Synthesis Example 2 of the Example 1 as a hardener, a specimen was prepared as in the Example 1, and its volume swelling ratio was calculated. The results are shown in Table 3.

[Comparative Example 2]

Using the manganese dioxide of the commercial product (1) (Type FA manufactured by Honeywell) instead of the manganese dioxide in the Synthesis Example 2 of the Example 1 as a hardener, a specimen was prepared as in the Example 1, and its volume swelling ratio was calculated. The results are shown in Table 3.

[Table 3]

| | Manganese Dioxide | | | Volume Swelling ratio of Hardened Product (%) |
|---|---|---|---|---|
| | Type | Type of Cation Between Layers | Sodium Content (wt %) | |
| Example 1 | Synthesis Example 2 | $Ca^{2-}$ | 0.01 | 6 |
| Example 2 | Synthesis Example 3 | $H^+$ | 0.07 | 8 |
| Example 3 | Synthesis Example 4 | $NH_4^+$ | 0.07 | 5 |
| Comparative Example 1 | Synthesis Example 1 | $Na^+$ | 2.93 | 41 |
| Comparative Example 2 | Commercial Product (1) | Substantially $Na^+$ | 2.70 | 32 |

As can be seen from Table 3, a volume swelling ratio of a hardened product of the hardenable composition using the manganese dioxide which has the monoclinic sodium birnessite structure were 41% in the Synthesis Example 1 of 2.93 % by weight of the sodium content (Comparative Example 1) and 32% in the commercial product of 2.70 % by weight of the sodium content (Comparative Example 2). On the other hand, we confirmed that a volume swelling ratio of a hardened product of the hardenable composition which contains the manganese dioxide having the monoclinic birnessite structure containing a sodium ion substituted with a cation was remarkably suppressed (Examples 1-3).

[Examples 4-7]

Using the manganese dioxide substituted with a calcium ion in the Synthesis Examples 5-8 which has different sodium contents in the monoclinic birnessite structure, a specimen was prepared as in the Example 1 and a volume swelling ratio of the hardened product was calculated. The results including those in the Example 1 and the Comparative Example 1 are shown together with sodium contents in Table 4.

[Table 4]

| | Manganese Dioxide | | | Volume Swelling ratio of Hardened Product (%) |
|---|---|---|---|---|
| | Type | Type of Cation Between Layers | Sodium Content (wt %) | |
| Example 1 | Synthesis Example 2 | $Ca^{2+}$ | 0.01 | 6 |
| Example 4 | Synthesis Example 5 | $Ca^{2+}$ | 0.09 | 6 |
| Example 5 | Synthesis Example 6 | $Ca^{2+}$ | 0.16 | 13 |
| Example 6 | Synthesis Example 7 | $Ca^{2+}$ | 0.30 | 15 |
| Example 7 | Synthesis Example 8 | $Ca^{2+}$ | 0.59 | 27 |

(continued)

| | Manganese Dioxide | | | Volume Swelling ratio of Hardened Product (%) |
|---|---|---|---|---|
| | Type | Type of Cation Between Layers | Sodium Content (wt %) | |
| Comparative Example 1 | Synthesis Example 1 | $Na^+$ | 2.93 | 41 |

Table 4 shows that the less the sodium contents are, the more the volume swelling of the hardened product is suppressed, and that the use of manganese dioxide having the monoclinic birnessite structure containing 0.15 % by weight or less of sodium reduced the volume swelling ratio of the hardened product to less than 10%.

[Examples 8-12]

The manganese dioxides in the Synthesis Examples 9-13, butyl benzyl phthalate, and tetrabutyl thiuram disulfide as hardeners were weighed based on the following compounding and kneaded using triple roll mills, wherein compounding amounts of each component were expressed as parts by weight with respect to 100 parts by weight of a liquid polysulfide polymer (thiokol "LP - 23", manufactured by Toray Fine Chemicals Co. , Ltd.) in the main agents of the Example 1.

- 10 parts by weight of manganese dioxide (Synthesis Examples 9-13)
- 13.0 parts by weight of butyl benzyl phthalate (manufactured by Daihachi Chemical Industry Co., Ltd.)
- 0.5 part by weight of tetrabutyl thiuram disulfide (NOCCELER TBT-N manufactured by Ouchi Shinko Chemical Industrial Co., Ltd.)

The main agents prepared in Example 1 and the above hardeners were kneaded well by hand to give a hardenable composition comprising the mixture thereof. The obtained hardenable composition was processed into 2 mm thickness and cured at 70 °C for 18 hours. The obtained sheet was to obtain three specimens of 30 mm x 30 mm, and after each specimen was immersed in hot water at 80 °C for 10 days, a volume swelling ratio of the hardened product was calculated as in Example 1. Average values of the three specimens are shown as a volume swelling ratio in Table 5.

[Examples 13 and 14]

Using the manganese dioxides in the Synthesis Examples 14 and 15, a specimen was prepared as in the Example 1 and a volume swelling ratio of the hardenable composition cured at 70 °C for 72 hours was calculated. The results are shown in Table 5.

[Table 5]

| | Manganese Dioxide | | | Volume Swelling ratio of Hardened Product (%) |
|---|---|---|---|---|
| | Type | Type of Cation Between Layers | Sodium Content (wt %) | |
| Example 8 | Synthesis Example 9 | $Mg^{2+}$ | 0.01 | 5 |
| Example 9 | Synthesis Example 10 | $Fe^{3+}$ | 0.00 | 6 |
| Example 10 | Synthesis Example 11 | $La^{3+}$ | 0.01 | 1 |
| Example 11 | Synthesis Example 12 | $Zn^{2+}$ | 0.07 | 7 |
| Example 12 | Synthesis Example 13 | $Ba^{2+}$ | 0.02 | 3 |
| Example 13 | Synthesis Example 14 | $Sr^{2+}$ | 0.01 | 5 |

(continued)

| | Manganese Dioxide | | | Volume Swelling ratio of Hardened Product (%) |
|---|---|---|---|---|
| | Type | Type of Cation Between Layers | Sodium Content (wt %) | |
| Example 14 | Synthesis Example 15 | $Ni^{2+}$ | 0.01 | 6 |

Table 5 shows that any of the manganese dioxides having the monoclinic birnessite structure containing a sodium ion substituted with a cation and so as to contain 0.15 % by weight or less of sodium (Examples 8-14) had a less than 10% of a volume swelling ratio of the hardened product, and that, as in the Examples 1-3, a hardenable composition with good hot water resistance was obtained.

From the results in Table 1-4, we confirmed that a volume swelling ratio of a hardened product of the hardenable composition containing the manganese dioxide having the monoclinic birnessite structure obtaining by substituting a sodium ion with a cation was remarkably suppressed. We also confirmed that when a sodium content is 0.15 % by weight or less, a volume swelling ratio of the hardened product after 80 °C hot water immersion can be less than 10%. after immersion

[Comparative Example 3]

Using the manganese dioxide of the commercial product (2) instead of the manganese dioxide in the Synthesis Examples 2 of the Example 1 as a hardener, a hardenable composition was prepared as in the Example 1, sandwiched by iron plates adjusted to create a 2 mm gap, and cured under 23 °C/50%/RH atmosphere for 7 days. However, the hardenable composition of the Comparative Example 3 did not harden. Then, it was further cured at 70 °C for 72 hours, but it did not harden.

[Comparative Example 4]

Based on the following compounding, a liquid polysulfide polymer (thiokol "LP - 23", manufactured by Toray Fine Chemicals Co., Ltd.), butyl benzyl phthalate, precipitated calcium carbonate, heavy calcium carbonate, and 3-glycidoxypropyltrimethoxysilane as main agents were mixed using a mixer. The manganese dioxide in the Synthesis Example 16, butyl benzyl phthalate, a phthalate based plasticizer, tetramethylthiuram disulfide, heavy calcium carbonate, and SFR carbon as hardeners were kneaded using triple roll mills.

[Composition of Main Agents]

- 100 parts by weight of thiokol "LP - 23" (manufactured by Toray Fine Chemicals Co., Ltd.)
- 37 parts by weight of butyl benzyl phthalate (manufactured by Daihachi Chemical Industry Co., Ltd.)
- 65 parts by weight of precipitated calcium carbonate (Hakuenka CC manufactured by Shiraishi Calcium Kaisha, Ltd.)
- 90 parts by weight of heavy calcium carbonate (Whiten SSB Red manufactured by Shiraishi Calcium Kaisha, Ltd.)
- 3 parts by weight of 3-glycidoxypropyltrimethoxysilane (SH-6040 manufactured by Dow Corning Toray)

[Composition of Hardeners]

- 10 parts by weight of manganese dioxide (Synthesis Example 16)
- 2.5 parts by weight of butyl benzyl phthalate (manufactured by Daihachi Chemical Industry Co., Ltd.)
- 10.5 parts by weight of phthalate based plasticizer (Santicizer 278 manufactured by Ferro Corp.)
- 0.5 part by weight of tetramethylthiuram disulfide (NOCCELER TT manufactured by Ouchi Shinko Chemical Industrial Co., Ltd.)
- 5 parts by weight of heavy calcium carbonate (NCC#410 manufactured by Nitto Funka Kogyo K.K)
- 0.5 part by weight of SRF carbon

Table 6 shows the results of types and properties of the manganese dioxide used as a hardener, and characteristics of the obtained hardenable composition, evaluated by the following methods.

[Evaluation of Hardness 6 Hours After Mixture]

The main agents and the hardeners obtained above were kneaded well by hand to give a hardenable composition comprising the mixture thereof. A 10 mm thickness of specimen was prepared with the obtained hardenable composition. This specimen was cured under 23 °C atmosphere, and measured for its hardness by type A durometer described in JIS K6253t 6 hours after the mixure of the main agents and hardeners. The results are shown in Table 6.

[Evaluation of Hardness 6 Hours After Mixture After 3 Days of Curing at 70 °C]

After the hardener obtained above was cured at 70 °C for 3 days, it was left in a laboratory at 23 °C for 1 day and returned to the environment at room temperature. This hardener after the heat curing was kneaded well by hand with the main agent obtained above to obtain a mixture. A 10 mm thickness of specimen was prepared with the hardenable composition comprising the mixture. This specimen was cured under 23 °C atmosphere, and measured for its hardness by type A durometer described in JIS K6253 6 hours after the mixture of the main agents and hardeners after the heat curing. The results are shown in Table 6.

[Evaluation of Volume Swelling ratio of Hardened Product]

The main agents and the hardeners obtained above were kneaded well by hand to give a hardenable composition comprising the mixture thereof. The obtained hardenable composition was sandwiched by iron plates adjusted to create a 2 mm gap and cured under 23 °C/ 50%/ RH atmosphere for 7 days. The obtained sheet-shaped hardened product was to obtain three specimens of 30 mm x 30 mm. After each specimen was immersed in hot water at 80 °C for 10 days, the volume swelling ratio was calculated by the following formula. Average values of the three specimens are shown as a volume swelling ratio in Table 6.

$$\text{Volume swelling ratio (\%)} = [(w3-w4) - (w1-w2)] / (w1-w2) \times 100$$

(Wherein, w1 is an initial weight in the air, w2 is an initial weight in water, w3 is a weight in the air after immersion, and w4 is a weight in water after immersion.)

[Comparative Examples 2 and 5 and Examples 15-28]

Using the manganese dioxides of the commercial product (1) and the Synthesis Examples 17-31 instead of the manganese dioxide in the Synthesis Example 16 of the Comparative Example 4 as a hardener, a hardener was prepared as in the Comparative Example 4. Using the obtained hardener and the main agent prepared as in the Comparative Example 4, a hardenable composition and a specimen were prepared as in the Comparative Example 4. A volume swelling ratio of the hardened product, a hardness of the hardenable composition 6 hours after the mixture thereof immediately after the preparation of the hardener, and a hardness of the hardenable composition 6 hours after the mixture thereof after the heat curing of the hardener at 70 °C for 3 days. The results are shown in Table 6.

| | Type of Manganese Dioxide | Na Content (wt %) | Organic Compound | | | Volume Swelling Ratio of Hardened Product (%) | Hardness 6 Hours After the Mixing | Hardness 6 Hours After Mixture After Heat Curing at 70 °C for 3 Days(ShoreA) |
|---|---|---|---|---|---|---|---|---|
| | | | Type | The Number of Hydroxyl | Added Amount (wt %) | | | |
| Comparative Example 2 | Commercial Product (1) | 2.70 | - | - | - | 32 | 46 | Below Measuring Lower Limit |
| Comparative Example 4 | Synthesis Example 16 | 2.75 | DEG | 2 | 2.0 | 32 | 47 | 29 |
| Comparative Example 5 | Synthesis Example 17 | 2.75 | TEA | 3 | 2.0 | 32 | 46 | 24 |
| Example 15 | Synthesis Example 18 | 0.07 | - | - | - | 8 | 41 | Below Measuring Lower Limit |
| Example 16 | Synthesis Example 19 | 0.07 | DEG | 2 | 1 | 8 | 43 | 39 |
| Example 17 | Synthesis Example 20 | 0.07 | DEG | 2 | 2 | 9 | 44 | 39 |
| Example 18 | Synthesis Example 21 | 0.07 | TEA | 3 | 1 | 8 | 42 | 35 |
| Example 19 | Synthesis Example 22 | 0.07 | TEA | 3 | 2 | 7 | 41 | 39 |
| Example 20 | Synthesis Example 23 | 0.07 | Dodecane | 0 | 2.0 | 10 | 38 | Below Measuring Lower Limit |
| Example 21 | Synthesis Example 24 | 0.07 | Ethanol | 1 | 2.0 | 9 | 40 | Below Measuring Lower Limit |

| | Type of Manganese Dioxide | Na Content (wt %) | Organic Compound | | | Volume Swelling Ratio of Hardened Product (%) | Hardness 6 Hours After Mixture (ShoreA) | Hardness 6 Hours After Mixture After Heat Curing at 70 °C for 3 Days(ShoreA) |
|---|---|---|---|---|---|---|---|---|
| | | | Type | The Number of Hydroxyl | Added Amount (wt %) | | | |
| Example 22 | Synthesis Example 25 | 0.07 | 1-Hexanol | 1 | 2.0 | 7 | 41 | 5 |
| Example 23 | Synthesis Example 26 | 0.07 | 1-Heptanol | 1 | 2.0 | 7 | 42 | 6 |
| Example 24 | Synthesis Example 27 | 0.07 | 1-Dodecanol | 1 | 2.0 | 7 | 40 | Below Measuring Lower Limit |
| Example 25 | Synthesis Example 28 | 0.07 | Propylene Glycol | 2 | 2.0 | 8 | 42 | Below Measuring Lower Limit |
| Example 26 | Synthesis Example 29 | 0.02 | - | - | - | 6 | 34 | Below Measuring Lower Limit |
| Example 27 | Synthesis Example 30 | 0.01 | DEG | 2 | 1.0 | 3 | 30 | 9 |
| Example 28 | Synthesis Example 31 | 0.02 | TEA | 3 | 1.0 | 6 | 33 | 10 |
| In the table, DEG means diethylene glycol and TEA means triethanolamine. | | | | | | | | |

As can be seen from Table 6, if a commercially available manganese dioxide coated with diethylene glycol or triethanolamine is used (Comparative Examples 4 and 5), reduction of hardenability of the hardener even heat cured at 70 °C for 3 days is suppressed compared with an uncoated product (Comparative Example 2), and the hardness 6 hours after the mixture of the main agents and hardeners becomes 24 or more. However, in the manganese dioxide in Comparative Examples 2, 4, and 5, a sodium ion existing between the layers of the monoclinic sodium birnessite is not substituted with a monovalent to trivalent cation, thus each of the volume swelling ratio of the hardened substance is no less than 30%.

Moreover, if the manganese dioxide which has the monoclinic proton substituted birnessite structure coated with a diethylene glycol or a triethanolamine is used (Examples 16-19), reduction of hardenability of the hardener even heat cured at 70 °C for 3 days is suppressed compared with an uncoated product (Example 15), and the hardness 6 hours of after the mixture of the main agents and hardeners becomes 35 or more. Also, if the manganese dioxide coated with diethylene glycol or triethanolamine is used (Examples 16-19), the hardening characteristics of the hardener which was heat cured at 70 °C for 3 days can be substantially improved, compared when using the manganese dioxide coated with an organic compound in which the number of hydroxyl group is less than 2 and/or the boiling point is less than 190 °C (Examples 20-25). Besides, any of the volume swelling ratios of the hardened products in Examples 15-25 are less than 10 %.

In addition, if the manganese dioxide which has the monoclinic calcium substituted birnessite structure coated with a diethylene glycol or a triethanolamine is used (Examples 27 and 28), reduction of hardenability of the hardener even heat cured at 70 °C for 3 days is suppressed compared with an uncoated product (Example 26), and the hardness 6 hours after the mixture of the main agents and hardeners becomes 9 or more. Also, any of the volume swelling ratios of the hardened products in Examples 26-28 are less than 10 %.

It is possible to suppress reduction of hardenability after the heat accelerated curing of the hardener at 70 °C for 3 days by coating the surface of the manganese dioxide with diethylene glycol or triethanolamine. In addition, using manganese dioxide which has the monoclinic cation substitued birnessite structure containing 0.40 % by weight or less sodium, a volume swelling ratio of the hardened product can be reduced to less than 10%.

**Claims**

**1.** Manganese dioxide used for a hardener for liquid polysulfide polymer, comprising;
a monoclinic cation-substituted birnessite manganese dioxide obtained by substituting with a monovalent to trivalent cation a sodium ion which is present between the layers of a monoclinic sodium birnessite, as shown in the following formula (1),

$$Na_{0.55}Mn_2O_4 \cdot 1.5H_2O \qquad (1)$$

**2.** Manganese dioxide according to claim 1, wherein said cation is selected from at least one of a calcium ion, a proton, an ammonium ion, a magnesium ion, a strontium ion, a nickel ion, an iron (III) ion, a lanthanum ion, a zinc ion, and a barium ion.

**3.** Manganese dioxide according to claim 1 or 2, wherein said monoclinic cation-substituted birnessite manganese dioxide has a sodium content of 0.15 % by weight or less.

**4.** Manganese dioxide according to any of claims 1 to 3, wherein interlayer distance of said monoclinic cation-substituted birnessite is 6.90-7.25 Å**.**

**5.** Manganese dioxide according to any of claims 1 to 4, wherein said manganese dioxide is obtained by treating the monoclinic sodium birnessite shown in said formula (1) with an aqueous solution including a monovalent to trivalent cation, thereby substituting the sodium ion with said cation and drying the birnessite.

**6.** Manganese dioxide according to any of claims 1 to 5, wherein said manganese dioxide is coated on its surface with an organic compound which is liquid at room temperature, and wherein the organic compound has at least two hydroxyl groups within its molecule and the boiling point of more than 190 °C.

**7.** Manganese dioxide according to claim 6, wherein said organic compound is selected from at least one of diethylene glycol, ethylene glycol, 1,5-pentanediol, polyethylene glycol, triethanolamine, and diethanolamine.

**8.** Manganese dioxide according to claim 6 or 7, wherein said manganese dioxide is cured at 70 °C in the state of

paste of the hardener dispersed in a plasticizer for three days, then the paste hardener was mixed with a main agent including said liquid polysulfide polymer to produce a mixed hardenable composition, with A hardness thereof becoming more than 9 at 6 hours after the mixture.

**9.** A hardenable composition comprising manganese dioxide and liquid polysulfide polymer of any of claims 1-8.

**10.** The hardenable composition according to claim 9, comprising at least one selected from a filler, a plasticizer, and a vulcanization accelerator.

**11.** The hardenable composition according to claim 10, wherein said filler is selected from at least one of carbon black, calcium carbonate, silica, and a micro balloon.

**12.** The hardenable composition according to claim 10 or 11, wherein said plasticizer is selected from at least one of phthalic ester, chlorinated paraffin, dipropylene glycol dibenzoate, and a halogen-terminal sulfur-containing polymer.

**13.** The hardenable composition according to any of claims 10 to 12, wherein said vulcanization accelerator is selected from at least one of a thiuram vulcanization accelerator and a guanidine vulcanization accelerator.

**14.** The hardenable composition according to any of claims 9 to 13, wherein a hardened product of said hardenable composition has a volume swelling ratio of less than 20% after immersed in 80 °C hot water for ten days.

[Figure 1]

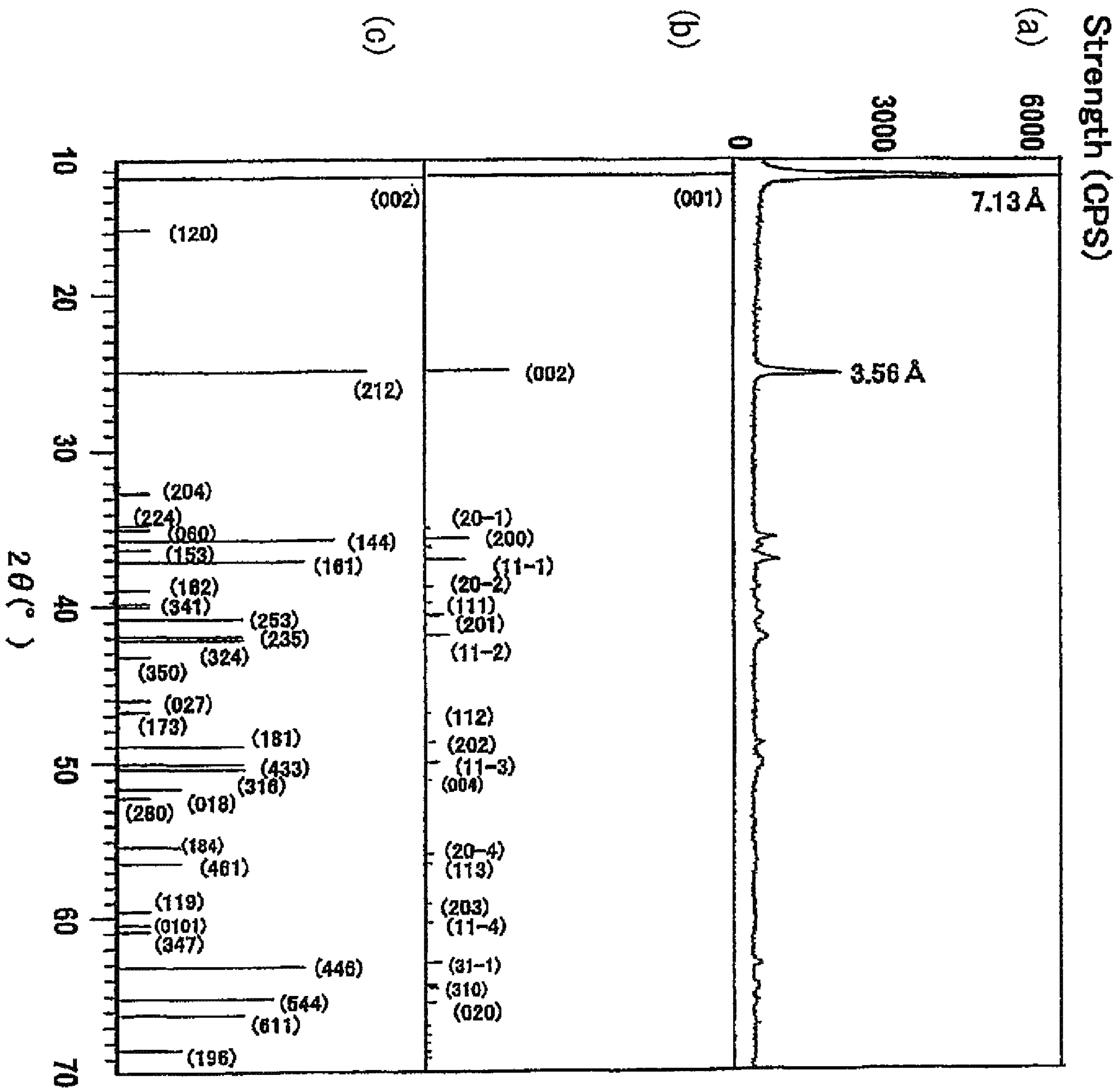
Strength (CPS)
(a)
(b)
(c)
0
3000
6000
7.13 Å
3.56 Å
(001)
(002)
(120)
(212)
(204)
(224)
(060)
(144)
(153)
(161)
(162)
(341)
(253)
(235)
(324)
(350)
(027)
(173)
(181)
(433)
(316)
(018)
(280)
(184)
(461)
(119)
(0101)
(347)
(446)
(544)
(611)
(196)
(20-1)
(200)
(11-1)
(20-2)
(111)
(201)
(11-2)
(112)
(202)
(11-3)
(004)
(20-4)
(113)
(203)
(11-4)
(31-1)
(310)
(020)
10
20
30
40
50
60
70
2θ(°)

[Figure 2]

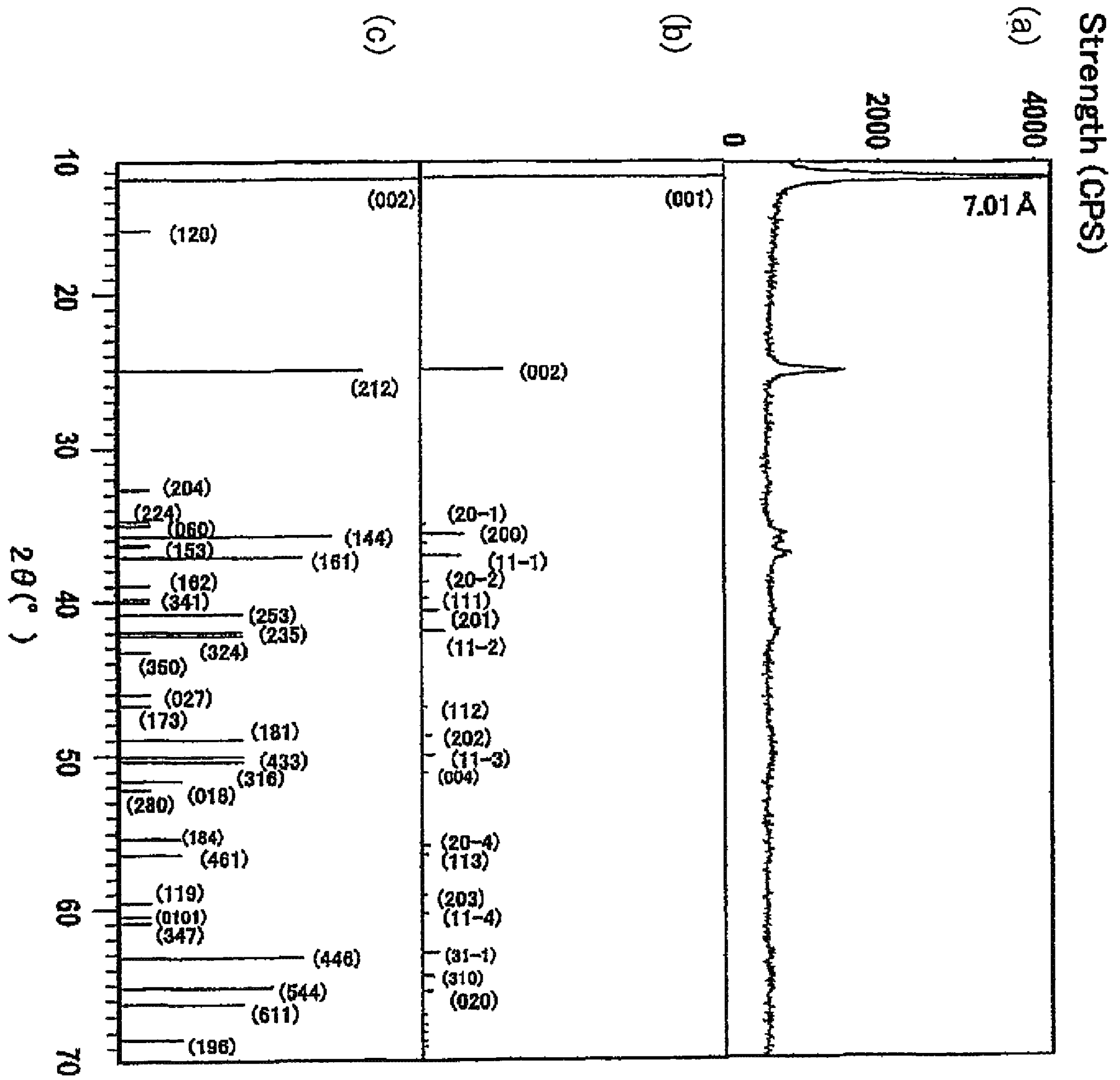

## INTERNATIONAL SEARCH REPORT

International application No.
PCT/JP2013/057678

A. CLASSIFICATION OF SUBJECT MATTER
*C01G45/00*(2006.01)i, *C09D181/04*(2006.01)n, *C09J181/04*(2006.01)n, *C09K3/10*(2006.01)n

According to International Patent Classification (IPC) or to both national classification and IPC

B. FIELDS SEARCHED

Minimum documentation searched (classification system followed by classification symbols)
C01G45/00, C09D181/04, C09J181/04, C09K3/10, C08L81/04, C08L3/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2007-161506 A (Toray Fine Chemicals Co., Ltd.), 28 June 2007 (28.06.2007), claims; paragraph [0001] (Family: none) | 1-14 |
| A | JP 63-22857 A (Cookson Group PLC), 30 January 1988 (30.01.1988), claims & US 5026504 A & GB 8612707 A & EP 246929 A2 | 1-14 |
| A | JP 11-21128 A (Director General, Agency of Industrial Science and Technology), 26 January 1999 (26.01.1999), paragraphs [0015] to [0017]; fig. 1 & US 6193947 B1 | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 June, 2013 (10.06.13) | 18 June, 2013 (18.06.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2013/057678

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-246022 A (Nippon Telegraph and Telephone Corp.), 30 August 2002 (30.08.2002), paragraphs [0030] to [0041] (Family: none) | 1-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63022857 A
- JP 2007161506 A
- JP 2007000904 A